# EUROPÄISCHE PATENTSCHRIFT

(11) **EP 3 281 214 B1**
(45) Veröffentlichungstag und Bekanntmachung des Hinweises auf die Patenterteilung: **14.04.2021**
(21) Anmeldenummer: 16724599.2
(22) Anmeldetag: 12.05.2016
(51) Int. Cl.: H01F 38/30, H02B 13/035, H01F 38/38, H01F 27/06

(54) **STROMWANDLER UND SCHALTANLAGE MIT EINEM STROMWANDLER**
CURRENT TRANSFORMER AND SWITCHGEAR HAVING A CURRENT TRANSFORMER
CONVERTISSEUR DE COURANT ET INSTALLATION DE COMMUTATION COMPRENANT UN CONVERTISSEUR DE COURANT

(30) Priorität: 02.06.2015 DE 102015210135
(43) Veröffentlichungstag der Anmeldung: 14.02.2018
(73) Patentinhaber: Siemens Energy Global GmbH & Co. KG, 81739 München (DE)
(72) Erfinder: KNAB, Wolfgang, 96103 Hallstadt (DE); WEIDNER, Wolfgang, 96179 Rattelsdorf (DE)
(86) Internationale Anmeldenummer: PCT/EP2016/060611
(87) Internationale Veröffentlichungsnummer: WO 2016/192943

(56) Entgegenhaltungen:
- EP-A1- 1 624 470
- EP-A2- 0 768 684
- DE-U1- 7 914 263
- US-A- 6 014 072

## Beschreibung

Die Erfindung betrifft einen Stromwandler und eine Schaltanlage mit einem Stromwandler.

Insbesondere betrifft die Erfindung Stromwandler für gekapselte, insbesondere gasisolierte Hochspannungsschaltanlagen. Derartige Stromwandler weisen häufig ringförmige Stromwandlerkerne auf, die stapelartig auf einem Kernträger angeordnet sind. Dabei sind die mechanische Befestigung und Stabilität, Berührungssicherheit, elektrischen Anschlüsse, Schutzart und elektrischen Rückleiter des Stromwandlers zu berücksichtigen.

Es wird auf die Dokumente US 6 014 072 A, DE 79 14 263 U1 und EP 0 768 684 A2 verwiesen, die sich jeweils auf Ringkernstromwandler zum Einbau in eine metallgekapselte Hochspannungsschaltanlage beziehen und für den Oberbegriff von Anspruch 1 herangezogen wurden.

Der Erfindung liegt die Aufgabe zugrunde, einen verbesserten Stromwandler und eine verbesserte Schaltanlage mit einem Stromwandler anzugeben.

Die Aufgabe wird erfindungsgemäß hinsichtlich des Stromwandlers durch die Merkmale des Anspruchs 1 und hinsichtlich der Schaltanlage durch die Merkmale des Anspruchs 12 gelöst.

Vorteilhafte Ausgestaltungen der Erfindung sind Gegenstand der Unteransprüche.

Ein erfindungsgemäßer Stromwandler umfasst einen Kernträger mit zwei elektrisch leitfähigen Trägerenden und wenigstens einem zwischen den beiden Trägerenden angeordneten elektrisch leitfähigen Trägerrohr, mehrere Stromwandlerkerne, wobei jeder Stromwandlerkern ringförmig an einer Außenseite eines Trägerrohres um eine Längsachse des Trägerrohres herum verläuft, und einen elektrisch leitfähigen Stromwandlermantel, der die Stromwandlerkerne umgibt und mit beiden Trägerenden fest verbunden ist. Dabei ist ein erstes Trägerende von jedem Trägerrohr durch wenigstens ein Isolierelement elektrisch isoliert und das zweite Trägerende ist mit jedem Trägerrohr elektrisch leitfähig verbunden.

Der Stromwandlermantel verleiht dem Stromwandler durch seine Verbindung mit den Trägerenden eine mechanische Festigkeit. Dadurch können weitere Stützelemente zur stabilen Verbindung der Trägerenden entfallen. Der Stromwandlermantel dient außerdem als Berührungsschutz, Bewitterungsschutz und elektrischer Rückleiter des Stromwandlers. Dadurch ermöglicht die Erfindung eine deutliche Reduzierung der Bauteile des Stromwandlers und vereinfacht dessen Montage. Jedes Isolierelement erzeugt vorteilhaft eine elektrisch isolierende Trennstelle, die die beiden Trägerenden elektrisch voneinander trennt. Eine Ausgestaltung der Erfindung sieht vor, dass der Stromwandlermantel mit dem ersten Trägerende kraftschlüssig, insbesondere durch Schraubverbindungen, oder stoffschlüssig, insbesondere durch Verschweißen, verbunden ist.

Dadurch kann der Stromwandlermantel zuverlässig mit dem ersten Trägerende verbunden werden.

Die Erfindung sieht vor, dass der Stromwandlermantel mit dem zweiten Trägerende stoffschlüssig verbunden, und zwar verschweißt, ist. Dies ermöglicht vorteilhaft eine feste Verbindung des Stromwandlermantels mit dem zweiten Trägerende.

Eine weitere Ausgestaltung der Erfindung sieht vor, dass wenigstens ein Trägerende einen ringförmigen Flanschbereich aufweist.

Ringförmige Flanschbereiche eignen sich besonders vorteilhaft zur Verbindung des Stromwandlers mit einer Schaltanlage, insbesondere mit einer gasisolierten Schaltanlage.

Eine weitere Ausgestaltung der Erfindung sieht vor, dass wenigstens ein Isolierelement lediglich formschlüssig mit dem ersten Trägerende und einem Trägerrohr verbunden ist.

Dadurch wird vorteilhaft eine feste Verbindung wenigstens eines Isolierelements mit dem Trägerrohr und/oder dem ersten Trägerende eingespart. Dies ist möglich, da der Stromwandlermantel eine feste Verbindung der Trägerenden ermöglicht.

Eine weitere Ausgestaltung der Erfindung sieht wenigstens eine von dem Stromwandlermantel umgebene elektrische Anschlussklemme des Stromwandlers vor.

Dadurch kann der Stromwandlermantel vorteilhaft auch zum Schutz der Anschlussklemmen und/oder als Anschlusskasten des Stromwandlers verwendet werden.

Eine weitere Ausgestaltung der Erfindung sieht vor, dass um jedes Trägerrohr herum mehrere Stromwandlerkerne stapelartig entlang der Längsachse des Trägerrohres angeordnet sind.

Dadurch werden die Stromwandlerkerne bauraumsparend an den Trägerrohren angeordnet.

Weitere Ausgestaltungen der Erfindung sehen vor, dass der Kernträger entweder genau ein Trägerrohr oder genau drei Trägerrohre aufweist.

Diese Ausgestaltungen sind auf einpolig oder dreipolig ausgebildete Stromwandler gerichtet.

Eine weitere Ausgestaltung der Erfindung sieht vor, dass die Trägerenden, das Trägerrohr und das wenigstens eine Isolierelement einen Gasraum druckdicht verschließen.

Diese Ausgestaltung der Erfindung ist besonders vorteilhaft, wenn der Stromwandler in einer gasisolierten Schaltanlage verwendet wird, in der sich ein unter Überdruck stehendes Isoliergas befindet. Unter einem druckdichten Verschließen eines Gasraums wird hier verstanden, dass ein mit einem Gas befüllbarer Raum bis zu einem vorgegebenen Konstruktionsdruck druckdicht verschlossen wird.

Eine weitere Ausgestaltung der Erfindung sieht vor, dass der Stromwandlermantel sowohl zu einer elektrischen Stromrückführung als auch zu einer Aufnahme mechanischer Umbruchkräfte ausgebildet ist.

Dadurch wird der Stromwandlermantel vorteilhaft gleichzeitig zur Rückführung elektrischer Ströme und zur mechanischen Stabilisierung des Stromwandlers genutzt. Unter einer Umbruchkraft wird hier eine auf den Stromwandler wirkende Biegekraft verstanden.

Eine erfindungsgemäße Schaltanlage weist einen erfindungsgemäßen Stromwandler mit den oben genannten Vorteilen auf und ist beispielsweise gasisoliert ausgeführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine perspektivische Darstellung eines ersten Ausführungsbeispiels eines Stromwandlers mit einem aufgebrochen dargestellten Stromwandlermantel,
- FIG 2: eine ausschnittsweise perspektivische Schnittdarstellung eines Kernträgers und eines Stromwandlerkerns des in Figur 1 dargestellten Stromwandlers,
- FIG 3: eine ausschnittsweise perspektivische Schnittdarstellung des in Figur 1 dargestellten Stromwandlers,

- FIG 4: eine perspektivische Darstellung eines zweiten Ausführungsbeispiels eines Stromwandlers mit einem aufgebrochen dargestellten Stromwandlermantel, und
- FIG 5: ausschnittsweise eine perspektivische Schnittdarstellung des in Figur 4 dargestellten Stromwandlers.

Einander entsprechende Teile sind in allen Figuren mit den gleichen Bezugszeichen versehen.

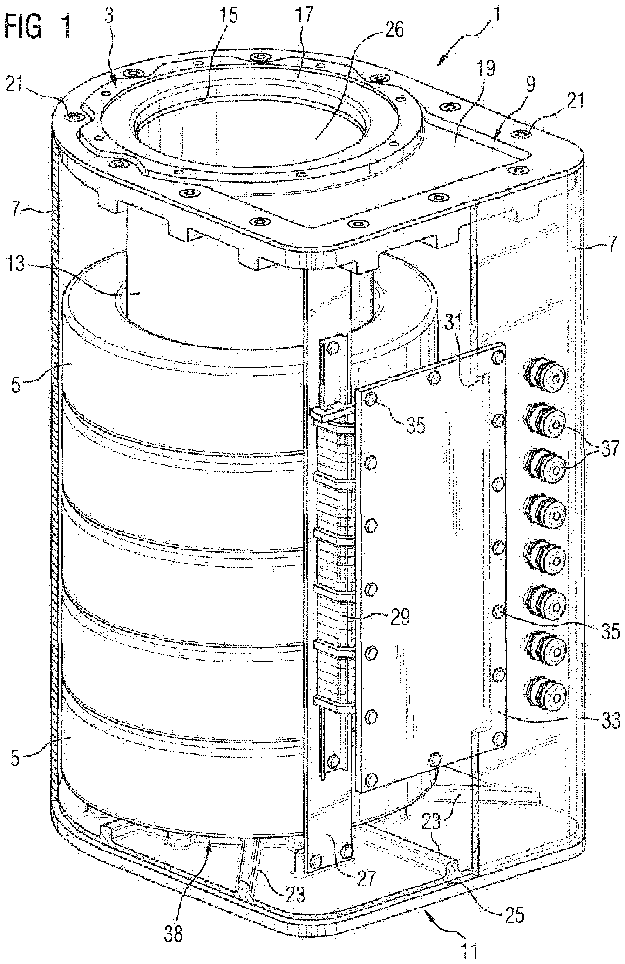

Figur 1 zeigt eine perspektivische Darstellung eines ersten Ausführungsbeispiels eines Stromwandlers 1. Der Stromwandler 1 dieses Ausführungsbeispiels ist einpolig ausgeführt und umfasst einen Kernträger 3, mehrere Stromwandlerkerne 5 und einen elektrisch leitfähigen Stromwandlermantel 7. Der Stromwandlermantel 7 ist aufgebrochen dargestellt, damit von ihm umschlossene Komponenten des Stromwandlers 1 sichtbar werden.

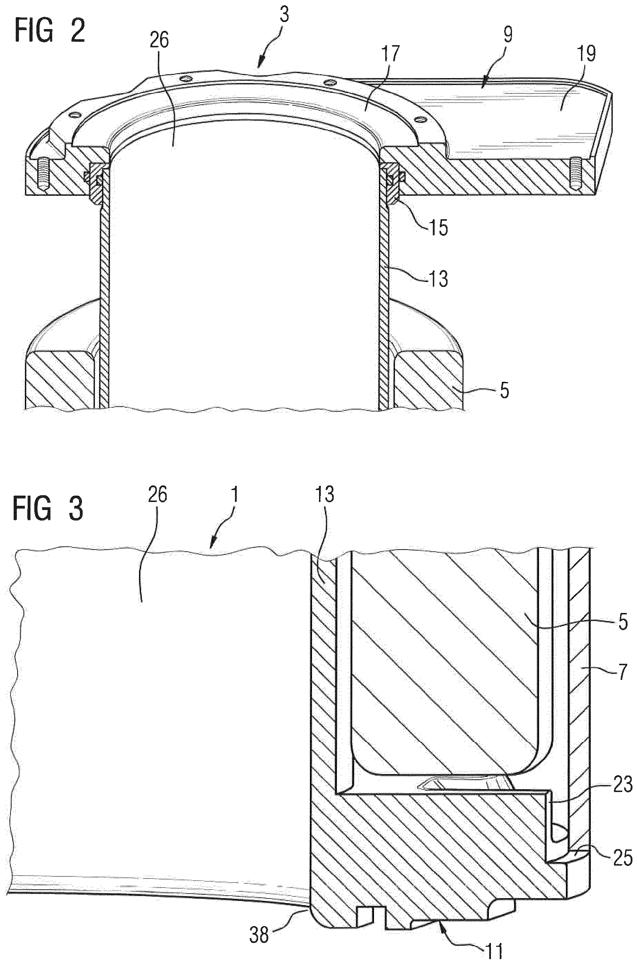

Figur 2 zeigt eine ausschnittsweise perspektivische Schnittdarstellung des Kernträgers 3 und eines Stromwandlerkerns 5 des in Figur 1 dargestellten Stromwandlers 1.

Figur 3 zeigt eine ausschnittsweise perspektivische Schnittdarstellung des in Figur 1 dargestellten Stromwandlers 1.

Der Kernträger 3 umfasst zwei elektrisch leitfähige Trägerenden 9, 11 und ein zwischen den beiden Trägerenden 9, 11 angeordnetes elektrisch leitfähiges Trägerrohr 13. Ein erstes Trägerende 9 ist von dem Trägerrohr 13 durch ein Isolierelement 15 elektrisch isoliert. Das zweite Trägerende 11 ist mit dem Trägerrohr 13 elektrisch leitfähig verbunden.

Das Trägerrohr 13 ist als ein kreiszylindrischer Hohlkörper mit offenen Enden ausgebildet.

Das Isolierelement 15 ist als ein Isolierring ausgebildet, der formschlüssig auf ein dem ersten Trägerende 9 zugewandtes Ende des Trägerrohres 13 aufgesetzt ist. Der Isolierring liegt auf diesem Ende des Trägerrohres 13 auf und umgibt kragenartig einen sich daran anschließenden Endbereich der Außenoberfläche des Trägerrohres 13.

Das erste Trägerende 9 ist formschlüssig auf das Isolierelement 15 aufgesetzt. Das erste Trägerende 9 weist einen ringförmigen ersten Flanschbereich 17 auf, der an dem Isolierelement 15 anliegt und um eine Längsachse des Trägerrohres 13 herum verläuft. Der erste Flanschbereich 17 ist von einem plattenartigen Deckelbereich 19 des ersten Trägerendes 9 umgeben, der einen an dem Stromwandlermantel 7 anliegenden Rand aufweist und mit dem Stromwandlermantel 7 durch Schraubverbindungen 21 verbunden ist.

Jeder Stromwandlerkern 5 ist ringförmig ausgebildet und verläuft an einer Außenseite des Trägerrohres 13 um eine Längsachse des Trägerrohres 13 herum. Die Stromwandlerkerne 5 sind stapelartig übereinander entlang der Längsachse des Trägerrohres 13 angeordnet.

Das zweite Trägerende 11 ist an das Trägerrohr 13 angeformt und im Wesentlichen plattenartig ausgebildet und weist eine kreisförmige Bodenöffnung 38 zu dem Trägerrohr 13 und mehrere von dem Trägerrohr 13 radial zu dem Stromwandlermantel 7 verlaufende Bodenrippen 23 auf. Der Stromwandlermantel 7 ist auf einen Randbereich 25 des zweiten Trägerendes 11 aufgesetzt und mit diesem verschweißt.

Die Trägerenden 9, 11, das Trägerrohr 13 und das Isolierelement 15 verschließen einen von ihnen umschlossenen, mit einem Isoliergas befüllbaren Gasraum 26 druckdicht bis zu einem vorgegebenen Konstruktionsdruck.

Der Stromwandler 1 weist außerdem eine Anschlussschiene 27 auf, die zwischen den Stromwandlerkernen 5 und dem Stromwandlermantel 7 von dem ersten Trägerende 9 zu dem zweiten Trägerende 11 verläuft und mehrere Anschlussklemmen 29 des Stromwandlers 1 trägt. Der Stromwandlermantel 7 weist eine den Anschlussklemmen 29 gegenüber liegende Mantelöffnung 31 auf, die durch eine Verschlussplatte 33 verschlossen ist. Die Verschlussplatte 33 ist durch Verbindungselemente 35, die beispielsweise als Schraubelemente ausgebildet sind, lösbar an dem Stromwandlermantel 7 befestigt, so dass die Verschlussplatte 33 von dem Stromwandlermantel 7 gelöst werden kann, um die Anschlussklemmen 29 zu erreichen. Der Stromwandlermantel 7 weist ferner mehrere neben der Mantelöffnung 31 angeordnete Durchführungen 37 auf, durch die beispielsweise elektrische Leiter von den Anschlussklemmen 29 nach außen geführt werden können.

Der Stromwandlermantel 7 ist als ein im Wesentlichen zylindermantelartiges Blech ausgebildet. Der Stromwandlermantel 7 liefert durch seine Verschraubung mit dem ersten Trägerende 9 und seine Verschweißung mit dem zweiten Trägerende 11 die mechanische Festigkeit des Stromwandlers 1 und dient außerdem als Berührungsschutz, Bewitterungsschutz, Anschlusskasten und elektrischer Rückleiter des Stromwandlers 1.

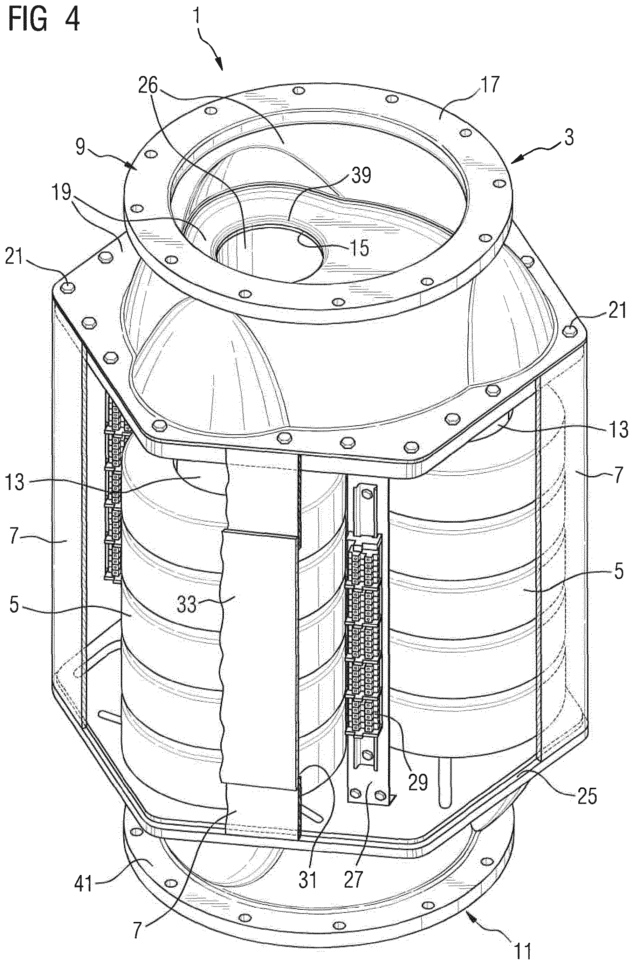

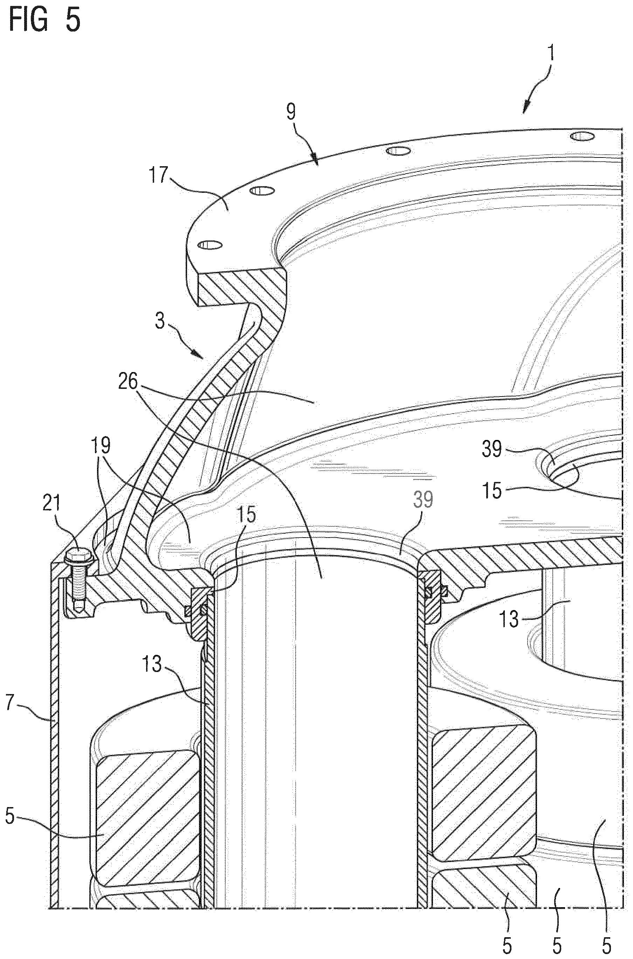

Die Figuren 4 und 5 zeigen ein zweites Ausführungsbeispiel eines Stromwandlers 1. Dabei zeigt Figur 4 eine perspektivische Darstellung des Stromwandlers 1 und Figur 5 zeigt ausschnittsweise eine perspektivische Schnittdarstellung des in Figur 4 dargestellten Stromwandlers 1.

Der in den Figuren 4 und 5 dargestellte Stromwandler 1 umfasst ebenfalls einen Kernträger 3, mehrere Stromwandlerkerne 5 und einen elektrisch leitfähigen Stromwandlermantel 7, ist jedoch im Unterschied zu dem in den Figuren 1 bis 3 dargestellten Stromwandler 1 dreipolig ausgebildet. Aufgrund seiner Dreipoligkeit weist der Kernträger 3 drei Trägerrohre 13 auf, die zueinander parallel zwischen einem ersten Trägerende 9 und einem zweiten Trägerende 11 des Kernträgers 3 verlaufen und jeweils einen Stapel ringförmiger Stromwandlerkerne 5 tragen. Analog zu Figur 1 ist der Stromwandlermantel 7 in Figur 4 aufgebrochen dargestellt, damit von ihm umschlossene Komponenten des Stromwandlers 1 sichtbar werden.

Analog zu dem in den Figuren 1 bis 3 dargestellten Stromwandler 1 ist jedes Trägerrohr 13 durch ein als ein Isolierring ausgebildetes Isolierelement 15 von dem ersten Trägerende 9 elektrisch isoliert, wobei die Isolierelemente 15 jeweils formschlüssig auf ein Trägerrohr 13 aufgesetzt sind. Das erste Trägerende 9 weist einen plattenartigen Deckelbereich 19 auf, der zu jedem Trägerrohr 13 eine Deckelöffnung 39 aufweist und formschlüssig auf die Isolierelemente 15 aufgesetzt ist. Der Deckelbereich 19 weist einen an dem Stromwandlermantel 7 anliegenden Rand auf und ist mit dem Stromwandlermantel 7 durch Schraubverbindungen 21 verbunden. An den Deckelbereich 19 ist ein trichterartig ausgebildeter erster Flanschbereich 17 angeformt, der zu den Trägerrohren 13 offen ist.

Das zweite Trägerende 11 des in den Figuren 4 und 5 dargestellten Stromwandlers 1 weist einen zweiten Flanschbereich 41 auf, der ähnlich wie der erste Flanschbereich 17 des ersten Trägerendes 9 ausgebildet ist und zu den Trägerrohren 13 hin offen ist. Analog zu dem in den Figuren 1 bis 3 dargestellten Stromwandler 1 ist das zweite Trägerende 11 an die Trägerrohre 13 angeformt und weist einen Randbereich 25 auf, an den der Stromwandlermantel 7 angeschweißt ist.

Auch der in den Figuren 4 und 5 dargestellte Stromwandler 1 weist Anschlussschienen 27 auf, die jeweils zwischen den Stromwandlerkernen 5 und dem Stromwandlermantel 7 von dem ersten Trägerende 9 zu dem zweiten Trägerende 11 verlaufen und mehrere Anschlussklemmen 29 des Stromwandlers 1 tragen. Der Stromwandlermantel 7 weist wenigstens eine Mantelöffnung 31 auf, die analog zu dem in den Figuren 1 bis 3 dargestellten Stromwandler 1 durch eine Verschlussplatte 33 verschließbar ist. Neben einer Mantelöffnung 31 weist der Stromwandlermantel 7 wie der in den Figuren 1 bis 3 dargestellte Stromwandler 1 mehrere, in den Figuren 4 und 5 nicht dargestellte Durchführungen 37 auf, durch die beispielsweise elektrische Leiter von den Anschlussklemmen 29 nach außen geführt werden können.

Die in den Figuren 1 bis 5 dargestellten Stromwandler 1 werden beispielsweise in Schaltanlagen, insbesondere in gasisolierten Schaltanlagen verwendet.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den durch die Ansprüche definierten

Schutzumfang der Erfindung zu verlassen.

## Patentansprüche

1. Stromwandler (1), umfassend
- einen Kernträger (3) mit zwei elektrisch leitfähigen Trägerenden (9, 11) und wenigstens einem zwischen den beiden Trägerenden (9, 11) angeordneten elektrisch leitfähigen Trägerrohr (13),
- mehrere Stromwandlerkerne (5), wobei jeder Stromwandlerkern (5) ringförmig an einer Außenseite eines Trägerrohres (13) um eine Längsachse des Trägerrohres (13) herum verläuft,
- und einen elektrisch leitfähigen Stromwandlermantel (7), der die Stromwandlerkerne (5) umgibt und mit beiden Trägerenden (9, 11) fest verbunden ist,
- wobei ein erstes Trägerende (9) von jedem Trägerrohr (13) durch wenigstens ein Isolierelement (15) elektrisch isoliert ist und das zweite Trägerende (11) mit jedem Trägerrohr (13) elektrisch leitfähig verbunden ist,
**dadurch gekennzeichnet,**
**dass** der Stromwandlermantel (7) mit dem zweiten Trägerende (11) stoffschlüssig verbunden ist, wobei der Stromwandlermantel (7) mit dem zweiten Trägerende (11) verschweißt ist.

2. Stromwandler (1) nach Anspruch 1,
**dadurch gekennzeichnet,**
**dass** der Stromwandlermantel (7) mit dem ersten Trägerende (9) kraftschlüssig oder stoffschlüssig verbunden ist.

3. Stromwandler (1) nach Anspruch 2,
**dadurch gekennzeichnet,**
**dass** der Stromwandlermantel (7) mit dem ersten Trägerende (9) durch Schraubverbindungen (21) verbunden oder verschweißt ist.

4. Stromwandler (1) nach einem der vorhergehenden Ansprüche,
**dadurch gekennzeichnet,**
**dass** wenigstens ein Trägerende (9, 11) einen ringförmigen Flanschbereich (17, 41) aufweist.

5. Stromwandler (1) nach einem der vorhergehenden Ansprüche,
**dadurch gekennzeichnet,**
**dass** wenigstens ein Isolierelement (15) lediglich formschlüssig mit dem ersten Trägerende (9) und einem Trägerrohr (13) verbunden ist.

6. Stromwandler (1) nach einem der vorhergehenden Ansprüche,
**gekennzeichnet durch**
wenigstens eine von dem Stromwandlermantel (7) umgebene elektrische Anschlussklemme (29).

7. Stromwandler (1) nach einem der vorhergehenden Ansprüche,
**dadurch gekennzeichnet,**
**dass** um jedes Trägerrohr (13) herum mehrere Stromwandlerkerne (5) stapelartig entlang der Längsachse des Trägerrohres (13) angeordnet sind.

8. Stromwandler (1) nach einem der vorhergehenden Ansprüche,
**dadurch gekennzeichnet,**
**dass** der Kernträger (3) genau ein Trägerrohr (13) aufweist.

9. Stromwandler (1) nach einem der Ansprüche 1 bis 7,
**dadurch gekennzeichnet,**
**dass** der Kernträger (3) genau drei Trägerrohre (13) aufweist.

10. Stromwandler (1) nach einem der vorhergehenden Ansprüche,
**dadurch gekennzeichnet,**
**dass** die Trägerenden (9, 11), das Trägerrohr (13) und das wenigstens eine Isolierelement (15) einen Gasraum (26) druckdicht verschließen.

11. Stromwandler (1) nach einem der vorhergehenden Ansprüche,
**dadurch gekennzeichnet,**
**dass** der Stromwandlermantel (7) sowohl zu einer elektrischen Stromrückführung als auch zu einer Aufnahme mechanischer Umbruchkräfte ausgebildet ist.

12. Schaltanlage mit einem Stromwandler (1) nach einem der vorhergehenden Ansprüche.

13. Schaltanlage nach Anspruch 12,
**dadurch gekennzeichnet,**
**dass** die Schaltanlage gasisoliert ausgeführt ist.

## Claims

1. Current transformer (1), comprising
- a core carrier (3) having two electrically conductive carrier ends (9, 11) and at least one electrically conductive carrier tube (13) that is arranged between the two carrier ends (9, 11),
- multiple current transformer cores (5), wherein each current transformer core (5) runs annularly around an outer face of a carrier tube (13) about a longitudinal axis of the carrier tube (13),
- and an electrically conductive current transformer outer casing (7) that surrounds the current transformer cores (5) and is fixedly connected to the two carrier ends (9, 11),
- wherein a first carrier end (9) is electrically insulated from each carrier tube (13) by means of at least one insulating element (15) and the second carrier end (11) is connected in an electrically conductive manner to each carrier tube (13),
**characterized in that**
the current transformer outer casing (7) is bonded substance-to-substance to the second carrier end (11), wherein the current transformer outer casing (7) is welded to the second carrier end (11).

2. Current transformer (1) according to Claim 1,
**characterized in that**
the current transformer outer casing (7) is connected to the first carrier end (9) in a non-positive-locking or is bonded substance-to-substance thereto.

3. Current transformer (1) according to Claim 2,
**characterized in that**
the current transformer outer casing (7) is connected to the first carrier end (9) by means of screw connections (21) or is welded thereto.

4. Current transformer (1) according to any one of the preceding claims,
**characterized in that**
at least one carrier end (9, 11) comprises an annular flange region (17, 41).

5. Current transformer (1) according to any one of the preceding claims,
**characterized in that**
at least one insulating element (15) is connected only in a positive-locking manner to the first carrier end (9) and a carrier tube (13).

6. Current transformer (1) according to any one of the preceding claims,
**characterized by**
at least one electrical connection clamp (29) that is surrounded by the current transformer outer casing (7).

7. Current transformer (1) according to any one of the preceding claims,
**characterized in that**
multiple current transformer cores (5) are arranged about each carrier tube (13) in a stack-like manner along the longitudinal axis of the carrier tube (13).

8. Current transformer (1) according to any one of the preceding claims,
**characterized in that**
the core carrier (3) comprises precisely one carrier tube (13) .

9. Current transformer (1) according to any one of Claims 1 to 7,
**characterized in that**
the core carrier (3) comprises precisely three carrier tubes (13).

10. Current transformer (1) according to any one of the preceding claims,
**characterized in that**
the carrier ends (9, 11), the carrier tube (13) and the at least one insulating element (15) seal a gas chamber (26) in a pressure-tight manner.

11. Current transformer (1) according to any one of the preceding claims,
**characterized in that**
the current transformer outer casing (7) is configured both so as to return electrical currents and also to absorb mechanical distorting forces.

12. Switchgear having a current transformer (1) according to any one of the preceding claims.

13. Switchgear according to Claim 12,
**characterized in that**
the switchgear is configured in a gas-insulated manner.

## Revendications

1. Transformateur (1) de courant comprenant
- un support (3) de noyaux ayant deux extrémités (9, 11) de support conductrices de l'électricité et au moins un tube (13) porteur conducteur de l'électricité, monté entre les deux extrémités (9, 11) du support,
- plusieurs noyaux (5) de transformateur de courant, chaque noyau (5) de transformateur de courant s'étendant annulairement sur une face extérieure d'un tube (13) support autour d'un axe longitudinal du tube (13) support,
- et une enveloppe (7) de transformateur de courant conductrice de l'électricité, qui entoure les noyaux (5) du transformateur de courant et qui est reliée fixement au deux extrémités (9, 11) du support,
- dans lequel une première extrémité (9) du support est isolée électriquement de chaque tube (13) du support par au moins un élément (15) isolant et la deuxième extrémité (11) du support est reliée d'une manière conductrice de l'électricité à chaque tube (13) du support,
**caractérisé**
**en ce que** l'enveloppe (7) du transformateur de courant est reliée à coopération de matière à la deuxième extrémité (11) du support, l'enveloppe (7) du transformateur de courant étant soudé à la deuxième extrémité (11) du support.

2. Transformateur (1) de courant suivant la revendication 1, **caractérisé**
**en ce que** l'enveloppe (7) du transformateur de courant est reliée à coopération de force ou à coopération de matière à la première extrémité (9) du support.

3. Transformateur (1) de courant suivant la revendication 2,
**caractérisé**
**en ce que** l'enveloppe (7) du transformateur de courant est reliée ou soudée à la première extrémité (9) du support par des vissages (21).

4. Transformateur (1) de courant suivant l'une des revendications précédentes,
**caractérisé**
**en ce que** la au moins une extrémité (9, 11) de support a une partie (17, 41) de rebord annulaire.

5. Transformateur (1) de courant suivant l'une des revendications précédentes,
**caractérisé**
**en ce qu'**au moins un élément (15) isolant est relié seulement à complémentarité de forme à la première extrémité (9) du support et à un tube (13) du support.

6. Transformateur (1) de courant suivant l'une des revendications précédentes,
**caractérisé**
**par** au moins une borne (29) de connexion électrique entourée de l'enveloppe (7) du transformateur de courant.

7. Transformateur (1) de courant suivant l'une des revendications précédentes,
**caractérisé**
**en ce que**, autour de chaque tube (13) du support, plusieurs noyaux (15) du transformateur de courant sont disposés en pile suivant l'axe longitudinal du tube (13) du support.

8. Transformateur (1) de courant suivant l'une des revendications précédentes,
**caractérisé**
**en ce que** le support (3) de noyau a exactement un tube (13).

9. Transformateur (1) de courant suivant l'une des revendications 1 à 7,
**caractérisé**
**en ce que** le support (3) du noyau a exactement trois tubes (13) .

10. Transformateur (1) de courant suivant l'une des revendications précédentes,
**caractérisé**
**en ce que** les extrémités (9, 11) du support, le tube (13) du support et le au moins un élément (15) isolant enferment d'une manière étanche à la pression un espace (26) pour du gaz.

11. Transformateur (1) de courant suivant l'une des revendications précédentes,
**caractérisé**
**en ce que** l'enveloppe (7) du transformateur de courant est constituée tant pour un retour de courant électrique qu'également pour une absorption de force de rupture mécanique.

12. Installation de distribution, ayant un transformateur (1) de courant suivant l'une des revendications précédentes.

13. Installation de distribution suivant la revendication 12,
**caractérisée**
**en ce que** l'installation de distribution est réalisée en étant isolée par du gaz.
